# EUROPÄISCHE PATENTSCHRIFT

(11) **EP 1 553 493 B1**
(45) Veröffentlichungstag und Bekanntmachung des Hinweises auf die Patenterteilung: **05.09.2007**
(21) Anmeldenummer: 04078334.2
(22) Anmeldetag: 07.12.2004
(51) Int. Cl.: G06F 11/00

(54) **Wiederanlauf eines Rechners in einer redundanten Rechnerkonfiguration**
Restart of a computer in a redundant computer configuration
Réamorçage d'un ordinateur dans une configuration redondante

(30) Priorität: 07.01.2004 DE 102004001819
(43) Veröffentlichungstag der Anmeldung: 13.07.2005
(73) Patentinhaber: SIEMENS AKTIENGESELLSCHAFT, 80333 München (DE)
(72) Erfinder: Wenger, Michael, 38126 Braunschweig (DE)

(56) Entgegenhaltungen:
- DE-A1- 4 000 295
- US-A1- 2003 163 768
- DATABASE WPI Section EI, Week 200310 Derwent Publications Ltd., London, GB; Class T01, AN 2003-107388 XP002324354 & JP 2002 318624 A (MITSUBISHI ELECTRIC CORP) 31. Oktober 2002 (2002-10-31) & "Automatic translation of JP2002-318624" ONLINE, 31. Oktober 2002 (2002-10-31),

## Beschreibung

Die Erfindung betrifft eine redundante Rechnerkonfiguration für schienengebundene Verkehrsmittel mit mindestens zwei sicheren Rechnern oder mindestens drei Rechnerkanälen, die identische Eingangsdaten verarbeiten.

Die Redundanz der sicheren Rechner wird vorzugsweise durch einen verdoppelten Rechneraufbau realisiert, - 2 x 2 von 2 Rechner -, wobei beide Rechner die gleichen Eingangsdaten verarbeiten und bei korrekter Datenverarbeitung zu den gleichen Ausgaben kommen. Denkbar ist aber auch ein mindestens dreikanaliger Aufbau - 2 von 3 Rechner - der Rechnerkonfiguration.

Nachfolgend wird im Wesentlichen auf eine 2 x 2 von 2 Rechnerkonfiguration eingegangen, ohne dass die Erfindung auf eine derartige Rechnerkonfiguration mit zwei zweikanaligen Rechnern beschränkt sein soll.

Im ausfallfreiem Zustand werden die Speicherbaugruppen beider Rechner parallel beschrieben. Die Speicherbaugruppen werden mit den gleichen signaltechnisch sicher zu speichernden Daten versorgt. Das bedeutet, dass beide Rechner den gleichen, aktuellen Betriebszustand aufweisen. In der Fahrzeug-Rechnerkonfiguration sind von beiden Rechnern beispielsweise die gleichen Daten zur erlaubten Höchstgeschwindigkeit gespeichert.

Problematisch bei Doppelrechnern ist der beispielsweise aufgrund einer Sicherheitsabschaltung eines Rechners verursachte Weiterbetrieb. Der abgeschaltete Rechner nimmt für die Zeit der Sicherheitsabschaltung nicht am Betrieb teil, so dass sicherheitskritische Daten nur in dem Rechner abgespeichert werden, der weiter den Betrieb führt. Werden beide Rechner im weiteren Verlauf betrieblich abgeschaltet und wieder eingeschaltet, dann könnte der zuvor aufgrund einer Sicherheitsabschaltung ausgefallene Rechner anlaufen und der zuvor ausfallfreie Rechner aufgrund einer Störung ausfallen und somit nicht anlaufen. In dem Falle wären die in der Speicherbaugruppe des anlaufenden Rechners vorhandenen Daten veraltet. Insbesondere, wenn diese Daten betriebseinschränkende Informationen, wie z. B. bezüglich der erlaubten Höchstgeschwindigkeit, beinhalten, ist der weitere signaltechnisch sichere Betrieb infrage gestellt. Aus der Druckschrift "Sicherheitsnachweis Signaltechnisch sichere remanente Datenspeicherung SIMIS 3116/3216" der Siemens AG ist es bekannt, eine Hardware-Überwachungseinrichtung für jeden Kanal eines Rechners vorzusehen, die dann anspricht, wenn ein Rechnerkanal von einer Sicherheitsabschaltung betroffen ist. Die Überwachungseinrichtung verhindert nach einer Rechnerkanalabschaltung grundsätzlich einen Wiederanlauf des ausgefallenen Kanals. Gleichzeitig wird eine Instandhaltungsanforderung an entsprechend geschultes Personal ausgelöst. Nachteilig ist vor allem der erhebliche personelle und zeitliche Aufwand. Außerdem ist die bekannte Überwachungseinrichtung für die Kanäle eines Rechners und nicht für die Rechner eines Rechnersystems konzipiert.

Mehrere redundante sichere Rechner werden beispielsweise aus auf Zügen zur Sicherung der Fahrt in beide Richtungen eing setzt. Üblicherweise ist pro Fahrtrichtung ein Zugsicherungsrechner vorgesehen, wobei der Zugsicherungsrechner im gezogenen Teil ausgeschaltet sein sollte, weil durch diesen inaktiven Rechner anderenfalls die Zwangsbremsung ausgelöst werden könnte. Der Aus-Zustand, der bei betrieblich eingeschaltetem, jedoch bezüglich der Ausgaben passivem Rechner auch durch eine Störung eingenommen sein kann, hat jedoch zur Folge, dass Daten bezüglich sicherheitskritischer Ereignisse nur den aktiven Rechner und nicht den passiven Rechner beaufschlagen. Solche sicherheitskritischen Daten können z. B. die vorgegebene Höchstgeschwindigkeit oder der zu überwachende Rückrollweg bei einem ETCS (European Train Control System) sein. Wenn bei Fahrtrichtungsänderung der zuvor passiv gewesene Rechner zum aktiven Rechner wird, befindet sich dieser in einem veraltertem Betriebsmodus. Das gilt zumindest solange, bis eine streckenseitige Balise überfahren wird, durch die eine bestimmte Kennung an den Zugsicherungsrechner übermittelt wird, wodurch der kennungsspezifische Datensatz im aktiven Zugsicherungsrechner gespeichert wird. Die Unsicherheit bis zur Balisenüberfahrt kann nicht hingenommen werden.

Aus der US2003/163768 A1 ist ein Multiprozessorsystem bekannt, bei dem eine Fehlerfortpflanzung von Eingabe/Ausgabe-Fehlern in Teilsysteme verhindert wird, indem von dem Fehler betroffene Komponenten des Systems identifiziert und von jedem Teilsystem während des Boot-Vorganges berücksichtigt werden.

Der Erfindung liegt die Aufgabe zugrunde, eine Rechnerkonfiguration der gattungsgemäßen Art anzugeben, bei der ein Erststart oder ein Neustart eines Rechners bzw. Rechnerkanals immer erfolgen soll, wenn sichergestellt ist, dass ein sicherer Betriebszustand des Gesamtsystems gegeben ist. Dabei ist anzustreben, manuelle Aktualisierungen der Datenbasis des zu startenden Rechners bzw. Rechnerkanals zu vermeiden.

Die Aufgabe wird erfindungsgemäß mit den Merkmalen des Anspruchs 1 gelöst. Durch den externen remanenten Speicher, mit dem jeder Rechner beschaltet ist, wird bei einem Neustart eines weiteren Rechners, quasi eines Partnerrechners, der geforderte Sicherheitsstandart eingehalten. Dazu werden dem externen remanenten Speicher Daten über sicherheitskritische Ereignisse, die eine Aktualisierung des Betriebszustandes des Partnerrechners erfordern, zugeführt. Nur für den Fall, dass überhaupt ein sicherheitskritisches Ereignis während der Abschaltphase des neu zu startenden Rechners aufgetreten ist, muss eine bestimmte Maßnahme eingeleitet werden. Wird nicht der Inhalt des sicherheitskritischen Ereignisses, sondern nur dessen Auftreten gespeichert, wird das Anlaufen des Partnerrechners verhindert oder mit entsprechenden sicherheitsrelevanten Einschränkungen freigegeben. Vorzugsweise ist der externe remanente Speicher jedoch zur Speicherung der Inhalte sicherheitskritischer Ereignisse ausgelegt. Der Speicherinhalt dient dann der Aktualisierung des Betriebszustandes des Partnerrechners, so dass dieser hernach vollständig freigegeben werden kann. Maßnahmen zur Sicherung der abgelegten Daten sind in den Normen EN 50 159 vorgeschrieben. Anschließend wird der Speicherinhalt gelöscht, wodurch der externe remanente Speicher erneut für die Überwachung des Partnerrechners zur Verfügung steht. Instandhaltungsmaßnahmen manueller Art zur Aktualisierung des Datenbestandes des ausgefallenen und nunmehr neu zu startenden Partnerrechners entfallen bei dieser Vorzugsvariante.

Im Gegensatz zur Hardwaresteuerung nach dem Stand der Technik ist das beanspruchte Verfahren softwaregesteuert und damit wesentlich flexibler. Der uneingeschränkte Wiederanlauf eines zuvor ausgefallenen 2 von 2 Rechners wird nur gezielt unterbunden, wenn zusätzlich ein zu speicherndes Ereignis eingetroffen ist. Das externe Speichermedium kann spezifisch gewählt und entsprechend ausgelegt werden. Zur Erhöhung der S cherheit und/oder Zuverlässigkeit ist der Einsatz mehrerer externer remanenter Speicher pro 2 von 2 Rechner möglich Als Speichermedium kann z. B. ein bistabiles Relais gemäß Anspruch 2, aber auch eine Computerfestplatte gemäß Anspruch 3 dienen. Welche Konfiguration gewählt wird und wie diese konkret ausgelegt wird, ist insbesondere von dem zu erreichenden Sicherheitsintegritylevel abhängig.

Wenn ein bistabiles Relais als Speichermedium gewählt wird, kann dieses mit einer Ausgabe gesetzt und mit einer zweiten Ausgabe gelöscht werden. Der Relaiskontakt wird von einem Eingang des Rechners genau dann betätigt, wenn der Partnerrechner - aus welchen Gründen auch immer - abgeschaltet wird oder bei Start des Gesamtsystems nicht angeschaltet ist und zusätzlich eine signaltechnisch sicher zu speichernde Information eingetroffen ist. Beide Bedingungen müssen erfüllt sein, damit der Kontakt betätigt wird und auf diese Weise beispielsweise direkt die Stromzufuhr des Partnerrechners sperrt. Der Kontakt kann jedoch auch bewirken, dass der sicherheitskritische Zustand vom Partnerrechner gelesen und somit verarbeitet wird, nachdem der Partnerrechner gestartet wurde.

Laufen nach einem Wiedereinschalten beide Rechner an, dann werden die Daten desjenigen Rechners gültig gesetzt, der nicht von dem Kontakt des bistabilen Relais blockiert ist. Der andere Rechner, der durch einen geschlossenen Relaiskontakt blockiert ist, muss zunächst aktualisiert werden. Nach der Aktualisierung erfolgt über einen Löscheingang ein Rücksetzen des bistabilen Relais in den Ausgangszustand. Auf diese automatische Löschfunktion kann verzichtet werden, wenn eine Aktualisierung des Rechners und eine Rücksetzung des Relais durch Instandhaltungspersonal vorgesehen ist.

Läuft nach dem Wiedereinschalten nur derjenige 2 von 2 Rechner an, der vor dem Ausschalten von einer Sicherheitsabschaltung betroffen war, dann nimmt er aufgrund des gesetzten Relaiskontaktes den Betrieb entweder gar nicht oder nur mit Einschränkungen auf, die projektspezifisch festzulegen sind. Im Falle der Speicherung der sicherheitsrelevanten Daten auf dem externen Speicher kann der angelaufene Rechner den Betrieb störungsfrei aufnehmen, nachdem er die Daten abgerufen hat. Analoge Sicherheitsmaßnahmen greifen auch, wenn beide Rechner anlaufen und beide Relaiskontakte gesetzt sind.

Falls es sich bei der Rechnerkonfiguration um eine Anordnung mit zwei Zugsicherungsrechnern handelt, die - wie eingangs beschrieben - nur alternativ betrieben werden, werden als externe remanente Speicher vorzugsweise Computersysteme mit Festplatten oder auch anderen Speichermedien eingesetzt, da Zustandsanzeigen von bistabilen Relais wegen der langen Zugleitungen zwischen den beiden Zugsicherungsrechnern nur sehr aufwendig realisierbar sind. Fallen im aktiv betriebenen, führenden Zugsicherungsrechner Daten an, die remanent zu speichern sind, dann werden diese Daten vorzugsweise nicht nur in diesem Zugsicherungsrechner, sondern zusätzlich auch in den angeschlossenen externen Computer mit remanentem Speicher abgelegt. Bei großen Datenmengen kann jedoch auch vorgesehen sein, dass nur die Information abgelegt wird, dass neue sicherheitskritische Daten eingetroffen sind. Die dabei anzuwendenden Sicherheitsmaßnahmen sind analog zu dem oben beschriebenen "Sicherheitsnachweis signaltechnisch sichere remanente Datenspeicherung" bekannt. Dass sich die Speicherbaugruppe nicht - wie beim Stand der Technik - im sicheren Rechner befindet, sondern extern angeordnet ist, spielt dabei keine Rolle.

Aus Sicherheitsgründen ist gemäß Anspruch 4 eine regelmäßige Überprüfung der einwandfreien Funktion der Speicherung vorgesehen. Dazu ist der sichere Rechner mit Rücklesemitteln ausgestattet, durch welche nach dem Schreiben relevanter Daten in den externen Speicher sofort eine Kontrolle stattfindet, ob die Speicherung erfolgreich war. Stellt der sichere Rechner fest, dass sich die Daten auf dem Speicher nicht erneuern lassen, hat er eine Sicherheitsreaktion auszulösen, die eine Instandsetzungsmaßnahme zur Folge hat, bevor der nicht eingeschaltete und nicht aktualisierte Partnerrechner durch Neustart Sicherheitsverantwortung erhält. Die Funktionen, die das Speichern in und die Rücklesung vom remanenten Speicher ausführen, müssen als getrennte Module realisiert sein, die lediglich entweder die Funktion "Speichern" oder die Funktion "Rücklesen" realisieren. Ein zuvor nicht betriebener, neu einzuschaltender Rechner hat den externen Speicher zunächst auf aktualisierte Datensätze abzufragen. Können keine korrekten Daten zurückgelesen werden, oder ist das Vorhandensein sicherheitsrelevanter Daten nicht eindeutig zurücklesbar, löst der neu einzuschaltende Rechner eine entsprechende Sicherheitsreaktion aus.

Gemäß Anspruch 5 ist eine Ausfalloffenbarung des Speichers durch regelmäßige Simulation der Speicherfunktion vorgesehen. Auf diese Weise lässt sich ein höheres Sicherheitsintegritylevel realisieren.

Die Erfindung beschränkt sich nicht auf die vorstehend beschriebenen Ausführungsbeispiele. Vielmehr ist eine Anzahl von Varianten denkbar, welche auch bei grundsätzlich anders gearteter Ausführung von den Merkmalen der Erfindung Gebramachen.

## Patentansprüche

1. Redundante Rechnerkonfiguration für schienengebundene Verkehrsmittel mit mindestens zwei sicheren Rechnern oder mindestens drei Rechnerkanälen, die identische Eingangsdaten verarbeiten, In der jeder Rechner oder Rechnerkanal mit einem externen remanenten Speicher verbunden ist, der den Ein-/Aus-Zustand eines Partnerrechners oder Partnerrechnerkanals und sicherheitskritische Ereignisse oder deren Vorhandensein speichert, wobei nur im Falle des Auftretens mindestens eines sicherheitskritischen Ereignisses während des Aus-Zustandes des Partnerrechners oder Partnerrechnerkanals das Anlaufen des Partnerrechners oder Partnerrechnerkanals entweder verhindert oder mit sicherheitsrelevanten Einschränkungen freigegeben oder nach Aktualisierung des Betriebszustandes des Partnerrechners oder Partnerrechnerkanals entsprechend dem/den sicherheitskritischem/n Ereignis/sen freigegeben wird.

2. Rechnerkonfiguration nach Anspruch 1,
**dadurch gekennzeichnet,**
**dass** der Speicher als bistabiles Relais ausgebildet ist.

3. Rechnerkonfiguration nach einem der vorangehenden Ansprüche,
**dadurch gekennzeichnet,**
**dass** der Speicher als Speichermedium, insbesondere Festplatte, eines Computers ausgebildet ist.

4. Rechnerkonfiguration nach einem der vorangehenden Ansprüche,
**dadurch gekennzeichnet,**
**dass** die Rechnerkonfiguration Rücklesemittel zum Überprüfen der in den Speicher eingeschriebenen Daten aufweist.

5. Rechnerkonfiguration nach einem der vorangehenden Ansprüche,
**dadurch gekennzeichnet,**
**dass** eine Ausfalloffenbarung des Speichers während des laufenden Betriebes vorgesehen ist, indem ein Rechner oder Rechnerkanal einen Aus-Zustand des Partnerrechners oder Partnerrechnerkanals simuliert und der Partnerrechner oder Partnerrechnerkanal den Aus-Zustand zurücksetzt.

## Claims

1. Redundant computer configuration for rail mounted means of transport with at least two secure computers or at least three computer channels, which process identical input data, in which each computer or computer channel is connected to an external remanent memory, which saves the on/off state of a partner computer or partner computer channel and safety-critical events or their presence, where only in the event of occurrence of at least one safety-critical event during the off state of the partner computer or partner computer channel, the start-up of the partner computer or partner computer channel is either prevented or released with safety-related restrictions or released after updating of the operational status of the partner computer or partner computer channel according to the safety-critical event(s).

2. Computer configuration according to Claim 1,
**characterized in that** the memory is developed as a bistable relay.

3. Computer configuration according to one of the preceding claims,
**characterized in that** the memory is developed as a storage medium, especially hard disk, of a computer.

4. Computer configuration according to one of the preceding claims, **characterized in that** the computer configuration has read-back means to check the data written to the memory.

5. Computer configuration according to one of the preceding claims,
**characterized in that** a failure disclosure of the memory during active operation is provided, **in that** a computer or computer channel simulates an off state of the partner computer or partner computer channel, and the partner computer or partner computer channel resets the off state.

## Revendications

1. Configuration informatique redondante pour moyens de transport sur rails, avec au moins deux ordinateurs sûrs ou au moins trois canaux informatiques qui traitent des données d'entrée identiques, dans laquelle chaque ordinateur ou canal informatique est relié à une mémoire rémanente externe qui mémorise l'état marche / arrêt d'un ordinateur partenaire ou canal informatique partenaire ainsi que des événements critiques pour la sécurité ou la présence de ceux-ci et dans laquelle, c'est seulement dans le cas de l'occurrence d'au moins un événement critique pour la sécurité pendant l'état d'arrêt de l'ordinateur partenaire ou canal informatique partenaire que le démarrage de l'ordinateur partenaire ou canal informatique partenaire est soit empêché, soit autorisé avec des restrictions déterminantes pour la sécurité, soit autorisé après actualisation de l'état de fonctionnement de l'ordinateur partenaire ou canal informatique partenaire en fonction du ou des événements critiques pour la sécurité.

2. Configuration informatique selon la revendication 1,
**caractérisée par le fait que** la mémoire est conçue comme un relais bistable.

3. Configuration informatique selon l'une des revendications précédentes,
**caractérisée par le fait que** la mémoire est conçue comme un support de mémorisation, notamment un disque dur, d'un ordinateur.

4. Configuration informatique selon l'une des revendications précédentes,
**caractérisée par le fait que** la configuration informatique comporte des moyens de relecture pour la vérification des données écrites dans la mémoire.

5. Configuration informatique selon l'une des revendications précédentes,
**caractérisée par le fait qu'**il est prévu une déclaration de panne de la mémoire pendant le fonctionnement en cours du fait qu'un ordinateur ou canal informatique simule un état d'arrêt de l'ordinateur partenaire ou canal informatique partenaire et que l'ordinateur partenaire ou canal informatique partenaire annule l'état d'arrêt.
